# FASCICULE DE BREVET EUROPEEN

(11) **EP 3 749 456 B1**
(45) Date de publication et mention de la délivrance du brevet: **22.12.2021**
(21) Numéro de dépôt: 19742820.4
(22) Date de dépôt: 12.04.2019
(51) Int. Cl.: B01L 3/02

(54) **DISPOSITIF DE VERROUILLAGE D'UNE VIS DE RÉGLAGE DE VOLUME POUR UN SYSTÈME DE PIPETAGE**
VORRICHTUNG ZUR ARRETIERUNG EINER VOLUMENVERSTELLSCHRAUBE FÜR EIN PIPETTIERSYSTEM
DEVICE FOR LOCKING A VOLUME ADJUSTMENT SCREW FOR A PIPETTING SYSTEM

(30) Priorité: 17.04.2018 FR 1853368
(43) Date de publication de la demande: 16.12.2020
(73) Titulaire: GILSON SAS, 95400 Villiers-le-Bel (FR)
(72) Inventeur: MALVOISIN, Hervé, 75020 Paris (FR)
(74) Mandataire: Brevalex
(86) Numéro de dépôt international: PCT/FR2019/050877
(87) Numéro de publication internationale: WO 2019/202246

(56) Documents cités:
- EP-A1- 1 514 600
- FR-A1- 3 040 896
- US-A- 5 892 161

## Description

### DOMAINE TECHNIQUE

La présente invention se rapporte au domaine des systèmes de pipetage tels que les systèmes automatisés de pipetage appelés robots, ou encore plus préférentiellement les pipettes de prélèvement monocanal ou multicanaux, également dénommées pipettes de laboratoire, ou encore pipettes de transfert de liquide à déplacement d'air, destinées au prélèvement et à l'introduction calibrés de liquide dans des récipients. De telles pipettes, qu'elles soient manuelles, motorisées ou hybrides, sont destinées à être tenues en main par un opérateur durant les opérations de prélèvement et de dispense de liquide.

L'invention concerne plus particulièrement les moyens mis en œuvre pour régler le volume de liquide à prélever.

### ETAT DE LA TECHNIQUE ANTERIEURE

Sur les pipettes conventionnelles, il est prévu une vis de réglage de volume à prélever, qui est commandée en rotation par un bouton de commande de la pipette, via une tige de commande reliant ce bouton à la vis de réglage de volume.

Lorsque la pipette comporte un compteur conçu pour afficher des valeurs très précises de volume, par exemple un compteur à quatre chiffres, le réglage de la pipette sur une valeur donnée peut parfois s'avérer délicat. En effet, le dernier chiffre du compteur est généralement associé à un tambour dont la rotation peut être plus rapide que celle du bouton de commande de pipette actionné par l'opérateur, d'où la difficulté d'atteindre la valeur précise souhaitée.

Pour répondre à cette problématique, il peut être envisagé l'adjonction d'un système de maintien de la vis de réglage de volume, dans différentes positions de cette vis. Si ce système de maintien permet de plus facilement atteindre la valeur précise de volume souhaité, il oppose néanmoins une résistance mécanique non-négligeable durant la rotation de la vis. Cette résistance, qui est donc profitable pour effectuer des ajustements précis de volume, peut en revanche s'avérer contraignante lorsque le réglage implique de balayer une grande plage de volume.

Le document US 5 892 161 décrit un exemple connu de pipette comprenant des moyens de réglage du volume de liquide à prélever dotés d'un système de maintien de la vis de réglage de volume. Les documents EP 1 514 600 et FR 3 040 896 décrivent des exemples connus de pipettes comprenant des moyens de réglage du volume de liquide à prélever dotés d'un système de verrouillage de la vis de réglage de volume.

### EXPOSÉ DE L'INVENTION

Pour répondre au moins partiellement à ces inconvénients, l'invention a tout d'abord pour objet un dispositif de verrouillage d'une vis de réglage de volume pour un système de pipetage, le dispositif de verrouillage comprenant :
d'une part un système à crabotage de maintien en position de la vis de réglage, le système comportant :
   - une première roue dentée comprenant des premières dents ;
   - une seconde roue dentée comprenant des secondes dents, ladite première roue dentée étant une roue de blocage destinée à être fixe en rotation par rapport à une pièce fixe du système de pipetage, et la seconde roue étant destinée à être solidaire en rotation de la vis de réglage, ou inversement ;
   - des moyens élastiques de rappel capables de rappeler les première et seconde roues l'une contre l'autre afin de faire coopérer les premières dents avec les secondes dents,
et d'autre part un système de commande du système de maintien à crabotage, le système de commande comportant :
   - un sélecteur de positions conçu pour être déplacé en rotation selon un axe central longitudinal du système de pipetage, entre trois positions parmi lesquelles une position de réglage libre, une position de réglage fin, et une position de verrouillage ;
   - un organe de commande solidaire en rotation du sélecteur de positions, l'organe de commande coopérant avec ladite roue de blocage du système à crabotage de manière à ce que :
      a) lorsque le sélecteur se trouve en position de réglage libre, l'organe de commande maintient la roue de blocage écartée axialement de l'autre roue du système à crabotage, en s'opposant à l'effort développé par les moyens élastiques de rappel, de sorte que les premières et secondes dents ne coopèrent pas les unes avec les autres ;
      b) lorsque le sélecteur se trouve en position de réglage fin, l'organe de commande autorise la roue de blocage à s'écarter puis à se rapprocher axialement de l'autre roue lors d'un passage d'une dent à une autre provoqué par la rotation de cette autre roue ; et
      c) lorsque le sélecteur se trouve en position de verrouillage, l'organe de commande bloque axialement ladite roue de blocage de façon à interdire le désengagement des premières et secondes dents.

Grâce au système de commande qui contrôle le système à crabotage de maintien de la vis de réglage, ce système à crabotage peut alternativement être rendu inactif, actif, et verrouillé. Dans le premier cas, obtenu avec le sélecteur en position de réglage libre, les dents des roues dentées ne coopèrent pas et n'exercent ainsi aucune résistance à la rotation de la vis de réglage. Dans cette position, une grande plage de volume peut être balayée, sans efforts particuliers. Dans le second cas, obtenu avec le sélecteur en position de réglage fin, les dents des roues dentées coopèrent entre elles, mais elles sont capables de se désengager puis de se réengager dans une position relative différente des deux roues. Cette position permet de facilement atteindre une valeur précise de volume souhaité, en particulier en fin de réglage. Enfin, dans le troisième cas obtenu avec le sélecteur en position de verrouillage, les dents des roues dentées coopèrent entre elles, et elles ne peuvent pas se désengager. Par conséquent, le volume réglé ne peut être modifié, de sorte que cette position s'avère particulièrement intéressante à adopter durant les opérations de pipetage, pour éviter un changement non désiré de volume cible.

L'invention présente de préférence au moins l'une des caractéristiques optionnelles suivantes, prises isolément ou en combinaison.

La roue de blocage comporte au moins un ergot radial faisant saillie vers l'extérieur, et l'organe de commande comporte au moins une piste associée à chaque ergot radial, les moyens élastiques de rappel forçant l'ergot radial à s'appuyer contre sa piste associée, celle-ci comprenant :
- une première portion de piste coopérant avec l'ergot radial lorsque le sélecteur se trouve en position de réglage libre ;
- une seconde portion de piste coopérant avec l'ergot radial lorsque le sélecteur se trouve en position de réglage fin, la seconde portion de piste étant décalée axialement de la première portion de piste au sein de l'organe de commande ; et
- une troisième portion de piste coopérant avec l'ergot radial lorsque le sélecteur se trouve en position de verrouillage, un élément de butée prévu sur l'organe de commande étant agencé en regard axialement de la troisième portion de piste, de manière à ce que l'ergot radial se situe axialement entre cet élément de butée, et la troisième portion de piste.

Les première, seconde et troisième portions de piste sont agencées dans cet ordre selon une direction circonférentielle. Néanmoins, un ordre circonférentiel différent pourrait être adopté, sans sortir du cadre de l'invention.

La piste comporte une zone de transition en forme de pente entre les première et seconde portions de piste, et la seconde portion de piste se situe axialement au même niveau que la troisième portion de piste.

L'élément de butée forme, avec la troisième portion de piste, une fente ouverte circonférentiellement du côté de la seconde portion de piste, et fermée du côté opposé par un fond de fente.

L'organe de commande comporte plusieurs pistes espacées circonférentiellement les unes des autres, chacune coopérant avec un ergot radial de la roue de blocage.

L'organe de commande est préférentiellement annulaire.

L'organe de commande et le sélecteur sont réalisés d'un seul tenant, ou par deux pièces distinctes couplées en rotation. Cette dernière configuration facilite l'assemblage du système de pipetage.

De préférence,
lesdites secondes dents de la seconde roue forment un nombre N de rangées annulaires concentriques, le nombre N étant un entier supérieur ou égal à 2 et chaque rangée étant éventuellement discontinue,
ladite seconde roue présentent au moins une zone de recouvrement de dents dans laquelle les N rangées annulaires de secondes dents présentent respectivement N secteurs de recouvrement qui se recouvrent les uns les autres selon une direction radiale de la seconde roue, et
les secondes dents des N secteurs de recouvrement sont décalées angulairement les unes des autres de façon à ce qu'au moins l'une des premières dents de la première roue dentée puisse se trouver dans plusieurs positions relatives par rapport à la seconde roue, dans chacune desquelles cette première dent est au contact de l'une des secondes dents de l'un des N secteurs, et au contact de l'une des secondes dents d'un autre de ces N secteurs.

Cette configuration préférée présente ainsi la particularité d'utiliser un mécanisme à crabotage pour maintenir la vis de réglage de volume dans différentes positions. Le nombre de ces positions distinctes peut être extrêmement important, sans pour autant se confronter à des problèmes de fabrication. En effet, en prévoyant une seconde roue dentée avec plusieurs rangées annulaires concentriques de secondes dents, et en procédant au décalage angulaire de ces dents en sein de chaque zone de recouvrement, il est possible de maintenir la vis de réglage dans de nombreuses positions sans rencontrer de problème faisabilité de ces dents. En d'autres termes, l'invention se révèle particulièrement astucieuse en comparaison d'une solution ne prévoyant qu'une rangée annulaire unique de dents sur la seconde roue, même si cette solution entre également dans le cadre de l'invention. Effectivement, pour atteindre le même nombre de positions de maintien qu'avec l'invention, cette seconde roue devrait alors présenter des dents de dimensions très faibles au sein de la rangée unique, pouvant s'avérer difficiles à fabriquer.

De préférence, chacun des N secteurs de recouvrement de la seconde roue dentée présente un même pas P entre ses secondes dents, et le décalage angulaire entre deux secteurs de recouvrement quelconques et directement consécutifs, parmi lesdits N secteurs, présente une valeur P/N.

La première roue dentée présente une unique rangée annulaire de premières dents, présentant le même pas P entre les premières dents.

Le nombre entier N est préférentiellement égal à deux, mais il pourrait être supérieur, sans sortir du cadre de l'invention.

Ladite seconde roue présente plusieurs zones de recouvrement de dents, espacées circonférentiellement les unes des autres, le nombre de ces zones de recouvrement étant préférentiellement supérieur à trois.

Chaque rangée annulaire de secondes dents présente des portions dentées espacées circonférentiellement par des portions non dentées, et les secteurs de recouvrement sont formés aux extrémités des portions dentées.

L'invention a également pour objet un système de pipetage comprenant une vis de réglage de volume, ainsi qu'un tel dispositif de verrouillage de cette vis. Le système est préférentiellement une pipette de prélèvement, de préférence manuelle, mais l'invention peut s'appliquer à tout autre système de pipetage énuméré ci-dessus.

De préférence, le système comporte un compteur à quatre chiffres.

De préférence, le sélecteur de positions présente une portion extérieure de préhension agencée autour d'une tige de commande du système de pipetage.

Le système est préférentiellement conçu pour avertir du passage du sélecteur dans chacune de ses trois positions, de préférence par des clics.

Chaque ergot radial de la roue de blocage traverse radialement l'organe de commande du système de commande, pour se loger coulissant dans une rainure longitudinale correspondante de la pièce fixe du système de pipetage.

Enfin, la position de réglage libre du sélecteur se trouve décalée, dans un sens circonférentiel, d'une valeur angulaire comprise entre 15 et 30° par rapport à la position de réglage fin, et la position de verrouillage se trouve décalée, dans un sens circonférentiel opposé, d'une valeur angulaire comprise entre 15 et 30° par rapport à la position de réglage fin.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de face d'une pipette de prélèvement à déplacement d'air, selon l'invention ;
- la figure 2 représente une vue en perspective d'une partie de la pipette montrée sur la figure précédente, comprenant un dispositif de verrouillage de la vis de réglage de volume, selon un mode de réalisation préféré de l'invention ;
- la figure 3 représente une vue en coupe d'une partie supérieure de la pipette montrée sur la figure précédente ;
- la figure 4 représente une vue en perspective d'un compteur équipant la pipette montrée sur les figures précédentes ;
- la figure 5 représente une vue en coupe longitudinale du compteur montré sur la figure précédente ;
- la figure 6 représente une vue détaillée en perspective du système de maintien à crabotage équipant le dispositif de verrouillage montré sur la figure 2 ;
- la figure 7 représente une vue en perspective d'une première roue dentée équipant le système de maintien à crabotage montré sur la figure précédente ;
- la figure 8 représente une vue en perspective d'une seconde roue dentée équipant le système de maintien à crabotage montré sur la figure 6 ;
- la figure 9 est une vue schématique de côté montrant la coopération entre les deux roues dentées montrées sur les figures 7 et 8 ;
- la figure 10 représente une vue en perspective d'un organe de commande appartenant à un système de commande du dispositif de verrouillage montré sur la figure 3 ;
- les figures 11a à 11c sont des vues en perspective montrant le système de commande, dans différentes positions ; et
- la figure 12 représente une vue de dessus de la pipette montrée sur les figures précédentes.

### EXPOSÉ DÉTAILLÉ DE MODES DE RÉALISATION PRÉFÉRÉS

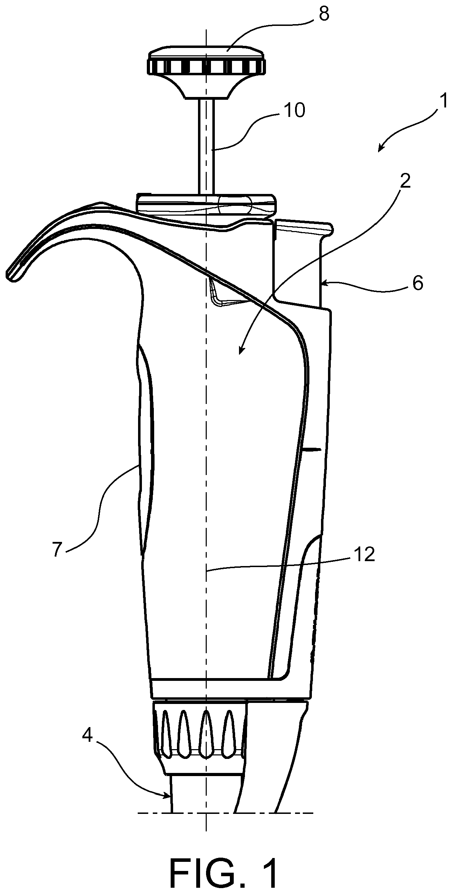

En référence tout d'abord à la figure 1, il est représenté une pipette de prélèvement 1 manuelle et monocanal, selon l'invention. Néanmoins, l'invention n'est pas limitée à une telle pipette, mais elle s'applique de manière analogue aux pipettes multicanaux ou à tout autre système de pipetage, manuel, motorisé ou hybride.

La pipette 1 à déplacement d'air, ici manuelle, comprend en partie supérieure un corps formant poignée 2, ainsi qu'une partie basse 4 destinée à intégrer à son extrémité inférieure un embout porte-cône de prélèvement (non représenté). Cet embout est prévu pour porter un cône, également dénommé consommable et destiné à être éjecté de l'embout par un système d'éjecteur 6, une fois les opérations de pipetage achevées.

Comme cela est visible sur les figures 1 à 3, la pipette 1 comporte un bouton de commande 8 destiné à être actionné par le pouce d'un opérateur, afin de réaliser les différentes opérations de pipetage comme le prélèvement du liquide, et sa dispense. Le bouton 8 est monté sur l'extrémité haute d'une tige de commande 10 destinée à être déplacée en translation durant les étapes de pipetage précitées, selon un axe central longitudinal 12 de la pipette. Le bouton 8 est couplé en rotation à la tige 10, de même que celle-ci présente une extrémité inférieure coopérant avec une vis de réglage de volume 14. Cette coopération est réalisée de telle sorte qu'une rotation de la tige de commande 10 entraîne une rotation de la vis 14 selon son propre axe, de préférence confondu avec l'axe central longitudinal 12 de la pipette.

De manière connue, la rotation de la vis de réglage 14 provoque sa translation le long de l'axe 12, ou la translation d'une autre pièce, afin de déplacer axialement un piston logé dans une chambre d'aspiration de la partie basse 4 de la pipette. C'est l'ajustement de la position haute de ce piston qui permet d'influer sur le volume prélevé ultérieurement lors du pipetage.

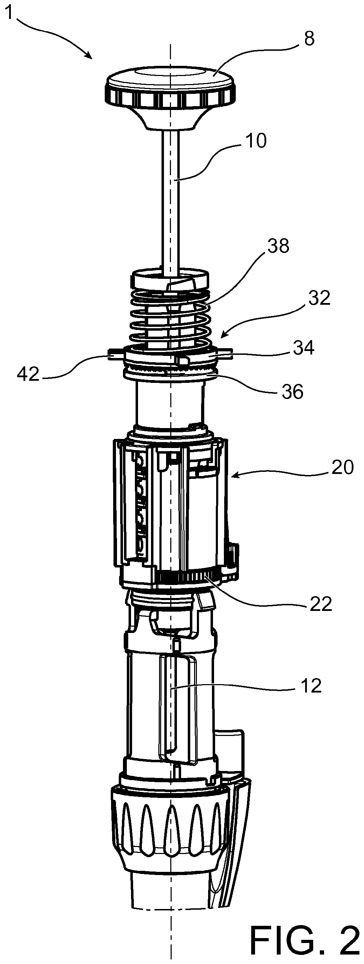

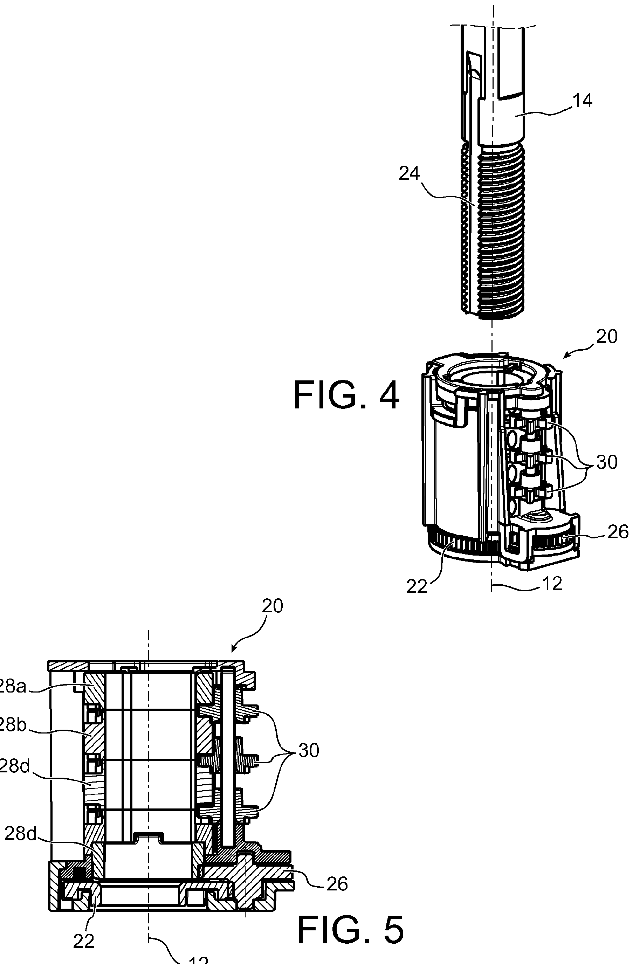

Les figures 2 et 4 montrent que la vis de réglage de volume 14 entraîne en rotation un compteur 20, destiné à afficher la valeur du volume réglé à travers une fenêtre 7 (référencée sur la figure 1) de la poignée 2. Ce compteur 20 est ici un compteur à quatre chiffres, également dénommé « compteur à quatre digits ». Ce type de compteur procure une très grande précision en comparaison des compteurs comprenant moins de chiffres, par exemple par rapport à un compteur à trois chiffres seulement.

Le compteur 20 comprend tout d'abord un système d'engrenages équipé d'une roue à dentée extérieure 22 centrée sur l'axe 12, directement entraînée en rotation par la vis de réglage 14. Cet entraînement s'effectue par exemple via un ergot en saillie vers l'intérieur à partir de la roue 22, et logé dans une rainure longitudinale 24 de la vis 14. Cette roue 22 engrène avec une autre roue excentrée 26 à denture extérieure, qui elle-même engrène avec une denture prévue sur un quatrième tambour 28d du compteur, renseignant sur le quatrième chiffre de volume réglé. Le quatrième tambour 28d, visible sur la figure 5, tourne à une vitesse élevée par rapport au bouton de commande, par exemple à une vitesse cinq fois supérieure.

Le compteur comporte également un premier tambour 28a, un second tambour 28b, ainsi qu'un troisième tambour 28c renseignant respectivement sur les premier, second, et troisième chiffres du volume réglé. Ces tambours 28a-28d sont superposés selon l'axe 12, et s'entraînent les uns les autres de façon connue, via des organes de transmission de mouvement 30.

La précision d'un tel compteur 20 est associée à la mise en œuvre d'un système spécifique à l'invention, permettant un maintien/blocage de la vis de réglage 14, une fois que celle-ci a été amenée dans la position précise conduisant à la valeur de volume souhaitée. Ce système 32, de nature à crabotage, permet également un déplacement aisé de la vis 14 entre différentes positions, lors de sa rotation effectuée pour changer la consigne de volume à prélever. Le système 32 se révèle particulièrement avantageux en ce qu'il permet d'aider l'opérateur à régler précisément le dernier chiffre du volume sur la valeur souhaitée, malgré la grande vitesse de rotation du quatrième tambour observée lors de la rotation du bouton de commande de la pipette. L'ergonomie de réglage du volume s'en trouve largement améliorée.

Le système 32 de maintien en position, visible sur les figures 2, 3 et 6, comprend globalement une première roue dentée 34 coopérant avec une seconde roue dentée 36, et un ressort de compression 38 rappelant l'une contre l'autre les deux roues coaxiales 34, 36 centrées sur l'axe 12.

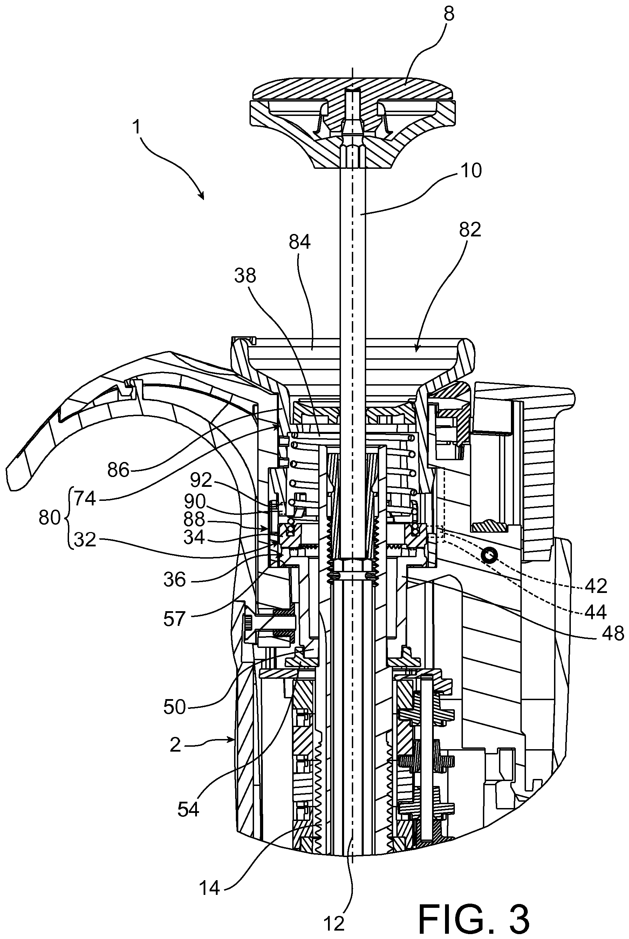

La première roue 34, celle située le plus en haut sur la pipette, comporte des premières dents 40 qui s'étendent axialement vers le bas. Cette roue 34 est fixe en rotation par rapport à la poignée 2, via des ergots radiaux 42 espacés circonférentiellement et faisant saillie vers l'extérieur de la roue. Chaque ergot 42 est logé coulissant dans une rainure longitudinale 44 de la surface intérieure de la poignée 2, comme cela est schématisé pour l'une d'elles sur la figure 3. La première roue 34 demeure ainsi fixe en rotation dans la poignée 2, mais mobile en translation à l'intérieur de celle-ci, selon l'axe 12.

Sous la première roue 34, également dénommée roue de blocage, la seconde roue 36 comporte des secondes dents 46 qui s'étendent axialement vers le haut. Cette seconde roue 36 est portée par une bague 48, ou un fût, dont l'extrémité basse comprend un moyen de couplage en rotation 50 traversé par la vis de réglage 14. Le moyen 50 assure un couplage en rotation avec la vis 14 par complémentarité de forme, par exemple par la présence d'un méplat ou d'un élément similaire. La roue 36 demeure ainsi pilotée en rotation par la vis de réglage 14, et reste fixe en translation. Cette dernière particularité est obtenue en faisant reposer la bague 48 sur une butée basse 54 rapportée à l'intérieur de la poignée 2, et/ou en faisant reposer la roue 36 sur un épaulement intérieur 57 de cette poignée.

Le ressort 38 applique quant à lui une pression sur la partie supérieure de la première roue 34, via une extrémité basse de ressort logée dans une gorge supérieure de cette roue. L'effort axial développé par le ressort 38 tend ainsi la première roue 34 à se déplacer vers le bas et à se plaquer contre la seconde roue 36 qui reste fixe en translation, avec pour conséquence la mise en coopération des premières et secondes dents 40, 46.

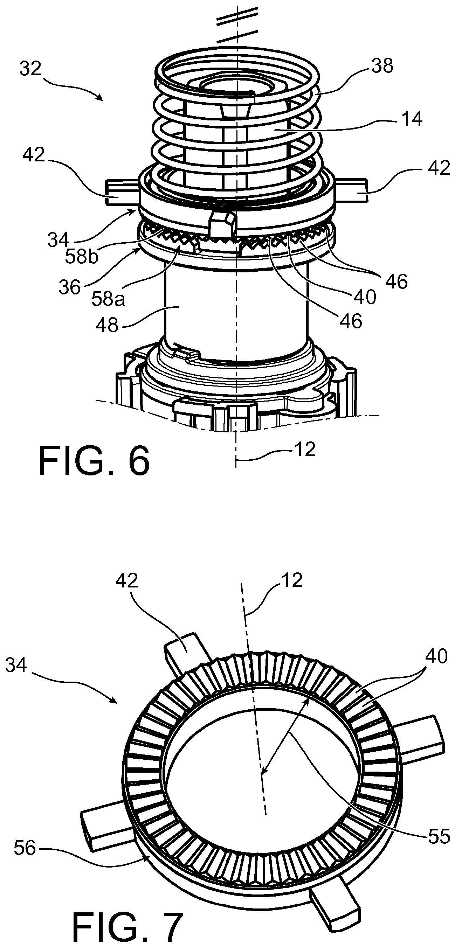

Une disposition préférée de ces dents va être décrite en référence aux figures 7 à 9.

Tout d'abord pour ce qui concerne la première roue 34, ses premières dents axiales 40 sont agencées au sein d'une unique rangée annulaire 56, qui est centrée sur l'axe 12 et de préférence continue sur 360°. Le nombre de dents 40 peut par exemple être de l'ordre de cinquante, avec un pas P régulier prévu entre ces mêmes dents 40.

La seconde roue 36 comporte quant à elle deux rangées annulaires, ou bien un nombre supérieur de rangées. Néanmoins, dans le mode de réalisation préféré qui est décrit, ce nombre est fixé à deux rangées annulaires concentriques 58a, 58b, centrées sur l'axe 12.

La première rangée 58a, correspondant à la rangée extérieure, est discontinue. Cela implique qu'elle est formée par des portions dentées 60a correspondant chacune à un arc de cercle pourvu de dents 46. Ces portions dentées 60a sont espacées circonférentiellement les unes des autres, de préférence de manière régulière. Entre celles-ci, il est prévu des portions non dentées 62a, correspondant à des portions évidées. A titre d'exemple, la première rangée annulaire 58a comporte quatre portions dentées 60a d'environ dix dents chacune, ainsi que quatre portions non dentées 62a présentant sensiblement la même étendue angulaire que les portions dentées 60a.

De manière analogue, la seconde rangée 58b, correspondant à la rangée intérieure, est discontinue. Cela implique qu'elle est formée par des portions dentées 60b correspondant chacune à un arc de cercle pourvu de dents 46. Ces portions dentées 60b sont espacées circonférentiellement les unes des autres, de préférence de manière régulière. Entre celles-ci, il est prévu des portions non dentées 62b, correspondant à des portions évidées. A titre d'exemple, la seconde rangée annulaire 58b comporte quatre portions dentées 60b d'environ dix dents chacune, ainsi que quatre portions non dentées 62b présentant sensiblement la même étendue angulaire que les portions dentées 60b.

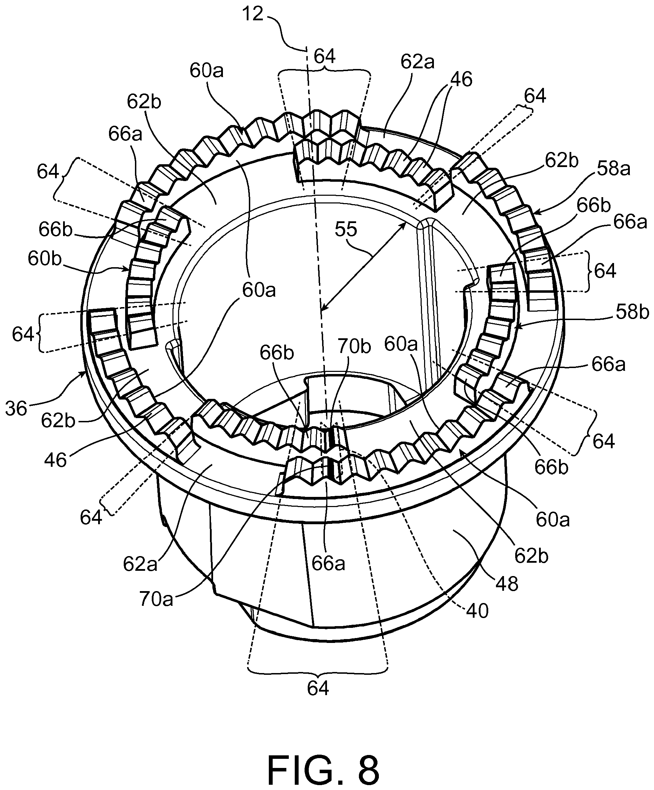

Comme cela est visible sur la figure 8, les portions dentées 60a, 60b sont agencées en décalage de phase, de sorte que chaque portion dentée 60a se trouve essentiellement en regard radialement d'une portion non dentée 62b de la seconde rangée 58b, de même que chaque portion dentée 60b se trouve essentiellement en regard radialement d'une portion non dentée 62a de la première rangée 58a.

Le pas entre les dents 46 de chaque portion dentée 60a, 60 est le même pas P que pour les dents 40 de la première roue 34.

Aux extrémités de ces portions dentées 60a, 60b qui se recouvrent partiellement selon la direction radiale 55, il est formé des zones de recouvrement de dents, ces zones étant référencées 64 sur la figure 8.

Chaque zone de recouvrement 64 est formée par un secteur de recouvrement 66a correspondant à une extrémité de l'une des portions dentées 60a, ainsi que par un secteur de recouvrement 66b correspondant à une extrémité de l'une des portions dentées 60b. Les deux secteurs 66a, 66b sont ainsi en regard radialement l'un de l'autre, pour former l'une des zones de recouvrement 64 ici prévues au nombre de huit, espacées régulièrement les unes des autres. Le nombre de dents par secteur 66a, 66b est par exemple compris entre deux et cinq.

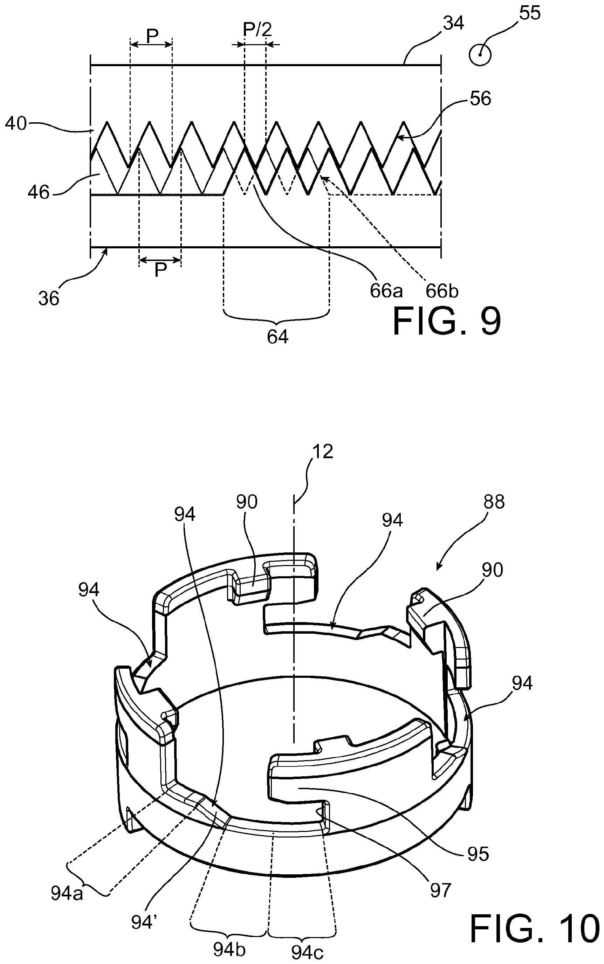

Au sein de chaque zone de recouvrement 64, les dents 46 du secteur 66a sont décalées d'un demi-pas P/2 par rapport aux dents 46 du secteur 66b. Par conséquent, chaque première dent 40 qui se trouve en coopération avec l'une des zones de recouvrement 64 de la seconde roue 36, est ainsi au contact d'une part de l'une des dents 46 du secteur 66a de cette zone, et au contact d'autre part de l'une des dents 46 du secteur 66b de cette même zone de recouvrement 64. Cette particularité a été représentée sur la figure 9, ainsi que sur le bas de la figure 8 montrant schématiquement une première dent 40 en contact avec deux dents 46 directement consécutives selon la direction circonférentielle, et appartenant respectivement aux deux secteurs 66a, 66b.

Pour ce faire, la longueur radiale de chaque première dent 40 est par exemple sensiblement deux fois plus grande que la longueur radiale de chaque seconde dent 46, ce qui permet d'établir deux surfaces de contact 70a, 70b entre une première dent 40, et les deux dents 46 directement consécutives au sein de la zone de recouvrement 64. A cet égard, il est noté que ces surfaces 70a, 70b, visibles sur le bas de la figure 8, sont agencées sur la partie supérieure des dents 46. Cela s'explique par le décalage de phases pratiqué entre les dents 46 des deux secteurs 66a, 66b, qui a pour conséquence que les premières dents 40 ne pénètrent pas entièrement dans les creux formés entre les secondes dents 46.

En fonctionnement, lorsque l'opérateur règle le volume souhaité via le bouton de commande 8, il entraîne la vis 14 qui elle-même provoque la rotation simultanée de la seconde roue 36. Le réglage du volume entre ses bornes inférieure et supérieure nécessite habituellement plusieurs tours du bouton de commande. Durant le mouvement de rotation de la seconde roue 36, les secondes dents 46 en mouvement exercent une force sur les premières dents 40 qui tend à repousser la première roue 34 axialement vers le haut, avant que celle-ci soit à nouveau forcée à se revenir vers le bas sous l'effet antagoniste du ressort 38. Ce mouvement de va-et-vient axial de la première roue de blocage 34 est observé à chaque passage d'une dent à une autre, et il permet au système 32 d'indexer la vis 14 dans un nombre de positions très élevé. Cela facilite l'exécution d'un réglage précis du volume souhaité. En particulier, au sein de chaque zone de recouvrement 64, le nombre de positions possibles pour une même première dent 40 relativement à la roue 46, correspond sensiblement au double du nombre de secondes dents 46 dans chaque secteur de recouvrement 66a, 66b formant cette zone 64. A titre indicatif, il est noté qu'au cours d'une rotation de 360° de la vis de réglage 14, celle-ci peut être indexée dans des dizaines de positions angulaires différentes, avec chacune de ces positions étant stable et précise, du fait d'une coopération à chaque fois différente entre les premières et secondes dents 40, 46.

La précision du réglage de volume est avantageusement accrue, sans que cela n'altère la facilité de fabrication des roues dentées 34, 36. Celles-ci peuvent par exemple aisément être réalisées par injection plastique, tout en conservant une qualité de dents satisfaisante.

A présent, il va être décrit en référence aux figures 3 et 10 à 12 l'une des particularités principales de l'invention, résidant dans l'association d'un système de commande 74 au système à crabotage 32 détaillé ci-dessus. Combinés, ces deux systèmes 32, 74 forment un dispositif de verrouillage 80 de la vis de réglage 14, ce dispositif 80 offrant de nombreuses fonctionnalités.

En référence plus précisément à la figure 3, le système de commande 74 comporte deux pièces distinctes, toutes les deux annulaires et superposées le long de l'axe 12 sur lequel elles sont centrées. Il s'agit tout d'abord d'un sélecteur de positions 82, conçu pour être déplacé en rotation selon l'axe 12 entre trois positions parmi lesquelles une position de réglage libre, une position de réglage fin, et enfin une position de verrouillage. Pour permettre ce déplacement dans les trois positions qui seront détaillées ci-après, le sélecteur 82 comporte une portion extérieure de préhension 84 en saillie axialement vers le haut par rapport à la poignée 2, et agencée autour de la tige de commande 10. Cette portion extérieure de préhension 84 se présente sous la forme d'une collerette pouvant être facilement agrippée par un opérateur, entre son pouce et son index.

La portion 84 se poursuit par une partie intérieure 86 du sélecteur, réalisée d'un seul tenant avec la portion 84. La partie intérieure 86, logée dans la poignée 2, entoure une partie du ressort 38. A son extrémité basse, elle coopère avec l'autre pièce du système 74, à savoir un organe de commande annulaire 88 qui entoure les deux roues dentées 34, 36. Les deux pièces 82, 88 sont couplées l'une à l'autre en rotation, par le biais d'excroissances 90 sur une extrémité haute de l'organe de commande 88, logées dans des fentes axiales 92 sur l'extrémité basse du sélecteur 82. Les deux pièces 82, 88 sont agencées de manière à rester fixes en translation selon l'axe 12, tout en pouvant tourner ensemble autour de ce même axe.

L'organe de commande 88 coopère avec la première roue dentée 34, constituant la roue de blocage du système à crabotage 32. Cette coopération s'effectue via les ergots radiaux 42, qui traversent radialement l'organe de commande 88 afin que leurs extrémités extérieures se logent de façon coulissante dans les rainures longitudinales 44 de la poignée 2.

Chaque ergot radial 42 est associé à une piste de l'organe de commande 88, en étant plaqué contre cette piste via le ressort 38 qui agit sur la roue dentée 34 portant ces ergots. Le nombre d'ergots radiaux 42 étant de quatre, il est ainsi prévu quatre pistes sur l'organe de commande 88, comme cela est représenté sur la figure 10. En effet, chacune des quatre pistes 94 s'étend sur un secteur angulaire de l'organe 88 qui est légèrement inférieur à 90°. Ces quatre pistes 94 présentent ainsi des formes identiques, et sont prévues pour coopérer de manière identique avec leurs ergots associés, de manière simultanée. Pour cette raison, la forme d'une seule de ces pistes 94 sera décrite ci-après.

La piste 94 débute par une première portion de piste 94a, correspondant à la portion de la piste située la plus haute dans la direction axiale. Vers la droite sur la figure 10, il est ensuite prévu une seconde portion de piste 94b, qui est décalée axialement de la première portion de piste 94a, en étant située plus bas. Une zone de transition 94' est agencée entre les deux portions 94a, 94b, cette zone de transition 94' prenant la forme d'une pente s'inclinant vers le bas en allant de la première portion de piste 94a, vers la seconde portion de piste 94b.

Enfin, vers la droite à partir de la seconde portion de piste 94b, il est prévu une troisième portion de piste 94c, qui se situe axialement au même niveau et dans la continuité de la seconde portion 94b. Un élément de butée 95 est agencé en regard axialement de la troisième portion de piste 94c, en étant porté par l'organe de commande 88. Avec cette troisième portion de piste 94c, l'élément de butée 95 forme une fente 96 ouverte circonférentiellement du côté où se situe la seconde portion 94b. Du côté opposé, la fente est fermée par un fond de fente 97. Par conséquent, cette configuration prend la forme d'un crochet ouvert circonférentiellement en direction de la seconde portion de piste 94b.

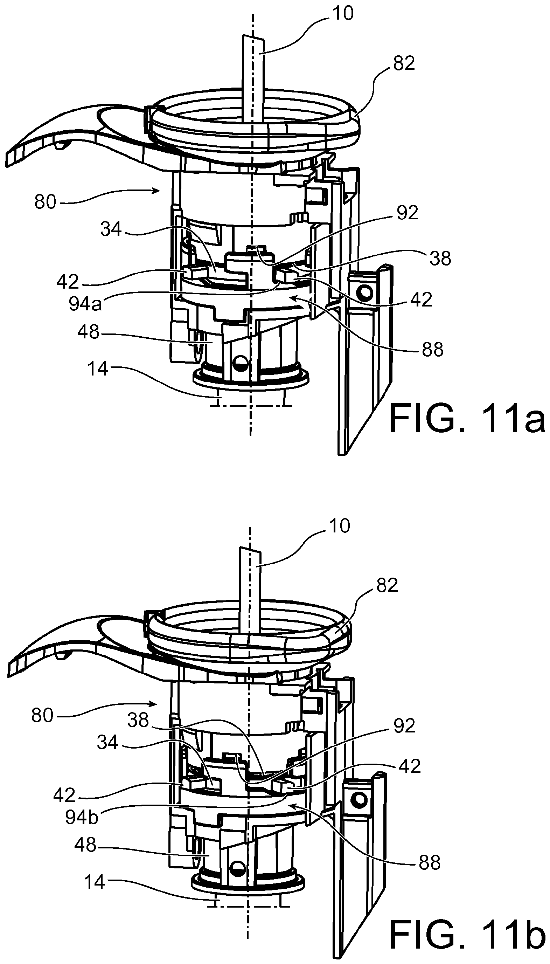

En référence à présent plus spécifiquement aux figures 11a à 11c, le dispositif de verrouillage 80 est représenté dans différentes positions. Tout d'abord, la figure 11a représente le sélecteur 82 dans une position de réglage libre, amenant les ergots radiaux 42 sur les premières portions de piste 94a. Ainsi, cette première portion 94a maintient la roue de blocage 34 vers le haut, dans une position écartée axialement de la seconde roue dentée. Cet écartement axial s'opère en s'opposant à l'effort développé par le ressort 38 sur cette même roue dentée de blocage 34, de sorte que les premières et secondes dents ne coopèrent pas les unes avec les autres comme cela avait décrit en référence à la figure 9. Dans cette position, puisque les dents n'opposent plus de résistance à la rotation de la vis de réglage de volume 14, une grande plage de volume peut être balayée, sans efforts particuliers de la part de l'opérateur. L'ergonomie du réglage de volume s'en trouve avantageusement améliorée.

En référence ensuite à la figure 11b, il est représenté le sélecteur 82 dans une position de réglage fin, amenant les ergots radiaux 42 sur les secondes portions de piste 94b. Le ressort 38, qui plaque les ergots 42 contre la seconde portion de piste 94b située plus basse axialement, place la roue de blocage 34 en coopération avec la seconde roue dentée. Les premières et secondes dents de ces roues coopèrent entre elles, et des passages d'une dent à une autre se produisent suite à la rotation de la vis 14, dans le cadre d'un réglage précis et ergonomique. C'est dans cette position de réglage que le principe de passage d'une dent à une autre, tel que présenté en référence aux figures 7 à 9, se produit. En effet, l'organe de commande 88 autorise la roue de blocage 34 à s'écarter puis à se rapprocher axialement de la seconde roue lors d'un passage d'une dent à une autre provoqué par la rotation de cette seconde roue, étant donné que les ergots 42 sont libres de se déplacer axialement vers haut avec la roue de blocage 34.

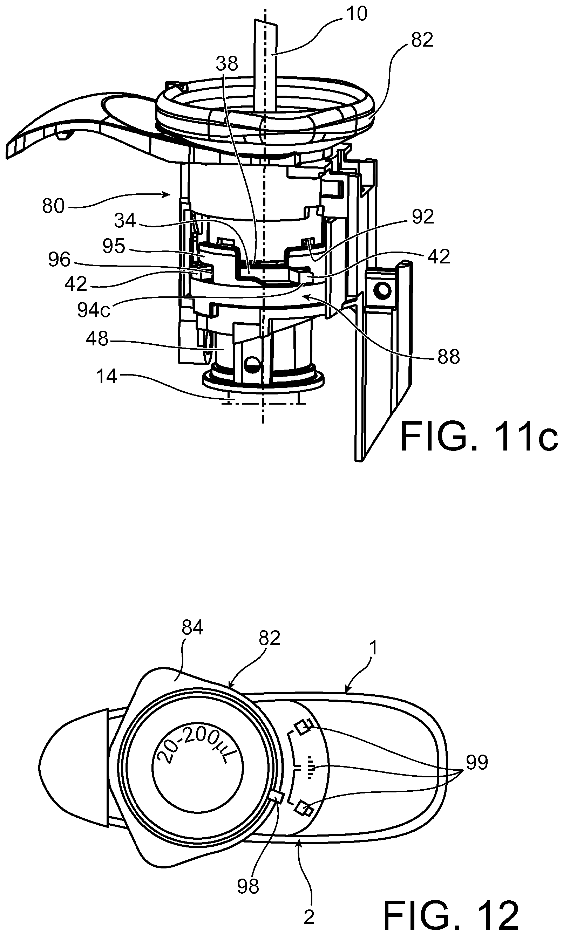

En référence enfin à la figure 11c, il est représenté le sélecteur 82 dans une position de verrouillage, amenant les ergots radiaux 42 sur les troisièmes portions de piste 94c. Plus précisément, chaque ergot 42 est logé axialement entre la troisième portion de piste 94c sur laquelle il est forcé en appui par le ressort 38, et l'élément de butée axiale 95, afin d'être prisonnier axialement dans la fente 96. Les éléments de butée 95 bloquent donc tout déplacement axial vers le haut des ergots 42 et de la roue de blocage associée 34, interdisant de ce fait tout désengagement des premières et secondes dents. Par conséquent, le volume réglé ne peut être modifié. Cette position de verrouillage est préférentiellement adoptée durant les opérations de pipetage, afin d'éviter que l'opérateur ne change accidentellement le volume cible par rotation du bouton de commande, sur lequel son pouce est en appui.

Les trois positions sont ainsi sélectionnées de manière appropriée par l'opérateur, en fonction du réglage souhaité. Par exemple, le début du réglage peut être effectué en position de réglage libre pour balayer sans efforts une grande plage de volume, puis à l'approche de la valeur cible, la position de réglage fin peut être adoptée de manière à facilement atteindre cette valeur précise. Une fois celle-ci atteinte, le sélecteur peut alors être placé en position de verrouillage, afin d'éviter tout changement accidentel de volume cible, durant les opérations ultérieures de pipetage.

En référence à la figure 12, il est montré que la pipette 1 peut être équipée d'un système permettant d'informer visuellement l'opérateur de la position du sélecteur 82. Pour ce faire, la surface extérieure de la poignée 2 ou la portion extérieure de préhension 84 de sélecteur 82 présente un curseur 98, tandis que l'autre de ces deux éléments présente trois repères 99 schématisant respectivement les trois positions possibles. C'est l'alignement du curseur 98 avec l'un des repères 99 qui permet à l'opérateur de déterminer la position dans laquelle se trouve le sélecteur 82. A cet égard, il est noté que la position de réglage libre du sélecteur 82 se trouve décalée d'une valeur angulaire comprise entre 15 et 30° par rapport à la position de réglage fin située au centre. De même, dans le sens circonférentiel opposé, la position de verrouillage se trouve décalée d'une valeur angulaire comprise entre 15 et 30° par rapport à la position de réglage fin. Ces valeurs angulaires sont par exemple de l'ordre de 20°, correspondant au déplacement angulaire que l'opérateur doit faire subir au sélecteur 82, afin de passer de la position centrale de réglage fin à l'une des deux positions d'extrémité de réglage libre ou de verrouillage.

Enfin, en plus des repères 99, l'opérateur est averti du passage du sélecteur 82 dans chacune des trois positions par des clics, qui sont obtenus de manière classique par des coopérations de forme entre la poignée 2 et le sélecteur 82.

Bien entendu, diverses modifications peuvent être apportées par l'homme du métier à l'invention qui vient d'être décrite, uniquement à titre d'exemples non limitatifs, et dont la portée est définie par les revendications annexées. Par exemple au sein du système de maintien 32 à crabotage, des modifications pourraient être apportées pour placer les rangées annulaires multiples sur la première roue, et non sur la seconde roue dentée qui ne présenterait alors plus qu'une seule rangée annulaire de dents. Alternativement, les deux roues dentées pourraient chacune présenter une unique rangée annulaire de dents, sans sortir du cadre de l'invention.

## Revendications

1. Dispositif de verrouillage (80) d'une vis de réglage de volume (14) pour un système de pipetage (1), le dispositif de verrouillage étant **caractérisé en ce qu'**il comprend :
d'une part un système à crabotage (32) de maintien en position de la vis de réglage (14), le système (32) comportant :
- une première roue dentée (34) comprenant des premières dents (40) ;
- une seconde roue dentée (36) comprenant des secondes dents (46), ladite première roue dentée étant une roue de blocage destinée à être fixe en rotation par rapport à une pièce fixe (2) du système de pipetage, et la seconde roue (36) étant destinée à être solidaire en rotation de la vis de réglage (14), ou inversement ;
- des moyens élastiques de rappel (38) capables de rappeler les première et seconde roues (34, 36) l'une contre l'autre afin de faire coopérer les premières dents (40) avec les secondes dents (46),
et d'autre part un système de commande (74) du système de maintien à crabotage (32), le système de commande (74) comportant :
- un sélecteur de positions (82) conçu pour être déplacé en rotation selon un axe central longitudinal (12) du système de pipetage, entre trois positions parmi lesquelles une position de réglage libre, une position de réglage fin, et une position de verrouillage ;
- un organe de commande (88) solidaire en rotation du sélecteur de positions (82), l'organe de commande coopérant avec ladite roue de blocage (34) du système à crabotage de manière à ce que :
a) lorsque le sélecteur (82) se trouve en position de réglage libre, l'organe de commande (88) maintient la roue de blocage (34) écartée axialement de l'autre roue (36) du système à crabotage, en s'opposant à l'effort développé par les moyens élastiques de rappel (38), de sorte que les premières et secondes dents (40, 46) ne coopèrent pas les unes avec les autres ;
b) lorsque le sélecteur (82) se trouve en position de réglage fin, l'organe de commande (88) autorise la roue de blocage (34) à s'écarter puis à se rapprocher axialement de l'autre roue (36) lors d'un passage d'une dent à une autre provoqué par la rotation de cette autre roue ; et
c) lorsque le sélecteur (82) se trouve en position de verrouillage, l'organe de commande (88) bloque axialement ladite roue de blocage (34) de façon à interdire le désengagement des premières et secondes dents (40, 46).

2. Dispositif selon la revendication 1, **caractérisé en ce que** la roue de blocage (34) comporte au moins un ergot radial (42) faisant saillie vers l'extérieur, et **en ce que** l'organe de commande (88) comporte au moins une piste (94) associée à chaque ergot radial (42), les moyens élastiques de rappel (38) forçant l'ergot radial à s'appuyer contre sa piste associée, celle-ci comprenant :
- une première portion de piste (94a) coopérant avec l'ergot radial lorsque le sélecteur se trouve en position de réglage libre ;
- une seconde portion de piste (94b) coopérant avec l'ergot radial lorsque le sélecteur se trouve en position de réglage fin, la seconde portion de piste étant décalée axialement de la première portion de piste au sein de l'organe de commande (88) ; et
- une troisième portion de piste (94c) coopérant avec l'ergot radial lorsque le sélecteur se trouve en position de verrouillage, un élément de butée (95) prévu sur l'organe de commande (88) étant agencé en regard axialement de la troisième portion de piste (94c), de manière à ce que l'ergot radial (42) se situe axialement entre cet élément de butée (95), et la troisième portion de piste (94c).

3. Dispositif selon la revendication 2, **caractérisé en ce que** les première, seconde et troisième portions de piste (94a, 94b, 94c) sont agencées dans cet ordre selon une direction circonférentielle.

4. Dispositif selon la revendication 2 ou la revendication 3, **caractérisé en ce que** la piste (94) comporte une zone de transition (94') en forme de pente entre les première et seconde portions de piste (94a, 94b), et **en ce que** la seconde portion de piste se situe axialement au même niveau que la troisième portion de piste (94c).

5. Dispositif selon l'une quelconque des revendications 2 à 4, **caractérisé en ce que** l'élément de butée (95) forme, avec la troisième portion de piste (95), une fente (96) ouverte circonférentiellement du côté de la seconde portion de piste (94b), et fermée du côté opposé par un fond de fente (97).

6. Dispositif selon l'une quelconque des revendications 2 à 5, **caractérisé en ce que** l'organe de commande comporte plusieurs pistes (94) espacées circonférentiellement les unes des autres, chacune coopérant avec un ergot radial (42) de la roue de blocage (34).

7. Dispositif selon l'une quelconque des revendications précédentes, **caractérisé en ce que** l'organe de commande (88) est annulaire.

8. Dispositif selon l'une quelconque des revendications précédentes, **caractérisé en ce que** l'organe de commande (88) et le sélecteur (88) sont réalisés d'un seul tenant, ou par deux pièces distinctes couplées en rotation.

9. Dispositif selon l'une quelconque des revendications précédentes, **caractérisé en ce que**
lesdites secondes dents (46) de la seconde roue (36) forment un nombre N de rangées annulaires concentriques (58a, 58b), le nombre N étant un entier supérieur ou égal à 2 et chaque rangée étant éventuellement discontinue,
ladite seconde roue (36) présentent au moins une zone de recouvrement de dents (64) dans laquelle les N rangées annulaires (58a, 58b) de secondes dents présentent respectivement N secteurs de recouvrement (66a, 66b) qui se recouvrent les uns les autres selon une direction radiale (55) de la seconde roue, et
les secondes dents (46) des N secteurs de recouvrement sont décalées angulairement les unes des autres de façon à ce qu'au moins l'une des premières dents (40) de la première roue dentée (34) puisse se trouver dans plusieurs positions relatives par rapport à la seconde roue (36), dans chacune desquelles cette première dent (40) est au contact de l'une des secondes dents (46) de l'un des N secteurs (66a), et au contact de l'une des secondes dents (46) d'un autre de ces N secteurs (66b).

10. Système de pipetage (1) comprenant une vis de réglage de volume (14), ainsi qu'un dispositif (80) de verrouillage de cette vis, selon l'une quelconque des revendications précédentes.

11. Système selon la revendication 10, **caractérisé en ce qu'**il comporte un compteur (20) à quatre chiffres.

12. Système selon la revendication 10 ou la revendication 11, **caractérisé en ce que** le sélecteur de positions (82) présente une portion extérieure de préhension (84) agencée autour d'une tige de commande (10) du système de pipetage.

13. Système selon l'une quelconque des revendications 10 à 12, **caractérisé en ce qu'**il est conçu pour avertir du passage du sélecteur (82) dans chacune de ses trois positions, de préférence par des clics.

14. Système de pipetage selon l'une quelconque des revendications 10 à 13, combinée à la revendication 2, **caractérisé en ce que** chaque ergot radial (42) de la roue de blocage traverse radialement l'organe de commande (88) du système de commande, pour se loger coulissant dans une rainure longitudinale correspondante (44) de la pièce fixe (2) du système de pipetage.

15. Système de pipetage selon l'une quelconque des revendications 10 à 14, **caractérisé en ce que** la position de réglage libre du sélecteur (82) se trouve décalée, dans un sens circonférentiel, d'une valeur angulaire comprise entre 15 et 30° par rapport à la position de réglage fin, et **en ce que** la position de verrouillage se trouve décalée, dans un sens circonférentiel opposé, d'une valeur angulaire comprise entre 15 et 30° par rapport à la position de réglage fin.

## Patentansprüche

1. Vorrichtung (80) zur Arretierung einer Volumeneinstellschraube (14) für ein Pipettiersystem (1), wobei die Arretiervorrichtung **dadurch gekennzeichnet ist, dass** sie Folgendes umfasst:
einerseits ein Klauenkupplungssystem (32) zum Halten der Position der Volumeneinstellschraube (14), wobei das System (32) Folgendes aufweist:
- ein erstes Zahnrad (34), das erste Zähne (40) umfasst,
- ein zweites Zahnrad (36), das zweite Zähne (46) umfasst, wobei das erste Zahnrad ein Sperrrad ist, das dazu bestimmt ist, bezüglich eines feststehenden Teils (2) des Pipettiersystems drehfest zu sein, und das zweite Rad (36) dazu bestimmt ist, drehstarr mit der Einstellschraube (14) verbunden zu sein, oder umgekehrt,
- elastische Rückholmittel (38), die in der Lage sind, das erste und das zweite Rad (34, 36) gegeneinander zurückzuholen, damit die ersten Zähne (40) mit den zweiten Zähnen (46) zusammenwirken,
und andererseits ein System (74) zum Steuern des Klauenkupplungshaltesystems (32), wobei das Steuersystem (74) Folgendes aufweist:
- einen Positionswähler (82), der dazu ausgelegt ist, drehungsmäßig gemäß einer Längsmittelachse (12) des Pipettiersystems zwischen drei Positionen bewegt zu werden, und zwar einer freien Einstellposition, einer Feineinstellposition und einer Arretierungsposition,
- ein drehstarr mit dem Positionswähler (82) verbundenes Steuerglied (88), wobei das Steuerglied mit dem Sperrrad (34) des Klauenkupplungssystems zusammenwirkt, so dass:
a) wenn sich der Wähler (82) in der freien Einstellposition befindet, das Steuerglied (88) das Sperrrad (34) axial von dem anderen Rad (36) des Klauenkupplungssystems beabstandet hält, indem es der von den elastischen Rückholmitteln (38) erzeugten Kraft entgegenwirkt, so dass die ersten und zweiten Zähne (40, 46) nicht miteinander zusammenwirken,
b) wenn sich der Wähler (82) in der Feineinstellposition befindet, das Steuerglied (88) dem Sperrrad (34) gestattet, sich zu entfernen und sich dann bei einem durch die Drehung dieses anderen Rads hervorgerufenen Übergang von einem Zahn zum anderen dem anderen Rad (36) axial zu nähern, und
c) wenn sich der Wähler (82) in der Arretierungsposition befindet, das Steuerglied (88) das Sperrrad (34) axial sperrt, um das Ausrücken der ersten und der zweiten Zähne (40, 46) zu verhindern.

2. Vorrichtung nach Anspruch 1, **dadurch gekennzeichnet, dass** das Sperrrad (34) mindestens einen radialen Zapfen (42) aufweist, der nach außen vorragt, und dass das Steuerglied (88) mindestens eine Spur (94) aufweist, die jedem radialen Zapfen (42) zugeordnet ist, wobei die elastischen Rückholmittel (38) den radialen Zapfen dazu zwingen, sich auf seine zugeordnete Spur zu stützen, wobei diese Folgendes umfasst:
- einen ersten Spurabschnitt (94a), der mit dem radialen Zapfen zusammenwirkt, wenn sich der Wähler in der freien Einstellposition befindet,
- einen zweiten Spurabschnitt (94b), der mit dem radialen Zapfen zusammenwirkt, wenn sich der Wähler in der Feineinstellposition befindet, wobei der zweite Spurabschnitt innerhalb des Steuerglieds (88) axial von dem ersten Spurabschnitt versetzt ist, und
- einen dritten Spurabschnitt (94c), der mit dem radialen Zapfen zusammenwirkt, wenn sich der Wähler in der Arretierungsposition befindet, wobei ein am Steuerglied (88) vorgesehenes Anschlagelement (95) dem dritten Spurabschnitt (94c) axial gegenüber angeordnet ist, so dass der radiale Zapfen (42) axial zwischen diesem Anschlagelement (95) und dem dritten Spurabschnitt (94c) angeordnet ist.

3. Vorrichtung nach Anspruch 2, **dadurch gekennzeichnet, dass** der erste, der zweite und der dritte Spurabschnitt (94a, 94b, 94c) in dieser Ordnung in einer Umfangsrichtung angeordnet sind.

4. Vorrichtung nach Anspruch 2 oder Anspruch 3, **dadurch gekennzeichnet, dass** die Spur (94) eine Übergangszone (94') in der Form einer Neigung zwischen dem ersten und dem zweiten Spurabschnitt (94a, 94b) aufweist und dass der zweite Spurabschnitt axial auf derselben Höhe wie der dritte Spurabschnitt (94c) angeordnet ist.

5. Vorrichtung nach einem der Ansprüche 2 bis 4, **dadurch gekennzeichnet, dass** das Anschlagelement (95) mit dem dritten Spurabschnitt (95) einen umfangsmäßig an der Seite des zweiten Spurabschnitts (94b) offenen und an der gegenüberliegenden Seite durch einen Schlitzboden (97) geschlossenen Schlitz (96) bildet.

6. Vorrichtung nach einem der Ansprüche 2 bis 5, **dadurch gekennzeichnet, dass** das Steuerglied mehrere umfangsmäßig voneinander beabstandete Spuren (94) aufweist, wobei jede mit einem radialen Zapfen (42) des Sperrrads (34) zusammenwirkt.

7. Vorrichtung nach einem der vorhergehenden Ansprüche, **dadurch gekennzeichnet, dass** das Steuerglied (88) ringförmig ist.

8. Vorrichtung nach einem der vorhergehenden Ansprüche, **dadurch gekennzeichnet, dass** das Steuerglied (88) und der Wähler (88) einstückig oder aus zwei separaten, drehgekoppelten Teilen ausgeführt sind.

9. Vorrichtung nach einem der vorhergehenden Ansprüche, **dadurch gekennzeichnet, dass**
die zweiten Zähne (46) des zweiten Rads (36) eine Anzahl N von konzentrischen ringförmigen Reihen (58a, 58b) bilden, wobei die Zahl N eine ganze Zahl größer oder gleich 2 ist und jede Reihe eventuell diskontinuierlich ist,
das zweite Rad (36) mindestens eine Zahnabdeckzone (64) hat, in der die N ringförmigen Reihen (58a, 58b) von zweiten Zähnen jeweils N Abdecksektoren (66a, 66b) aufweisen, die einander in einer radialen Richtung (55) des zweiten Rads abdecken, und
die zweiten Zähne (46) der N Abdecksektoren winkelförmig zueinander versetzt sind, so dass sich mindestens einer der ersten Zähne (40) des ersten Zahnrads (34) in mehreren Relativpositionen bezüglich des zweiten Rads (36) befinden kann, wobei dieser erste Zahn (40) in jeder von ihnen in Kontakt mit einem der zweiten Zähne (46) des einen der N Sektoren (66a) und in Kontakt mit einem der zweiten Zähne (46) eines anderen dieser N Sektoren (66b) ist.

10. Pipettiersystem (1), umfassend eine Volumeneinstellschraube (14) sowie eine Vorrichtung (80) zur ihrer Arretierung nach einem der vorhergehenden Ansprüche.

11. System nach Anspruch 10, **dadurch gekennzeichnet, dass** es einen vierstelligen Zähler (20) aufweist.

12. System nach Anspruch 10 oder Anspruch 11, **dadurch gekennzeichnet, dass** der Positionswähler (82) einen äußeren Griffabschnitt (84) aufweist, der um eine Steuerstange (10) des Pipettiersystems angeordnet ist.

13. System nach einem der Ansprüche 10 bis 12, **dadurch gekennzeichnet, dass** es dazu ausgelegt ist, auf das Übergehen des Wählers (82) in jede seiner drei Positionen vorzugsweise mittels Klickgeräuschen hinzuweisen.

14. Pipettiersystem nach einem der Ansprüche 10 bis 13, kombiniert mit Anspruch 2, **dadurch gekennzeichnet, dass** jeder radiale Zapfen (42) des Sperrrads das Steuerglied (88) des Steuersystems radial durchquert, um gleitend in einer entsprechenden Längsnut (44) des feststehenden Teils (2) des Pipettiersystems aufgenommen zu werden.

15. Pipettiersystem nach einem der Ansprüche 10 bis 14, **dadurch gekennzeichnet, dass** die freie Einstellposition des Wählers (82) in Umfangsrichtung um einen Winkelwert zwischen 15 und 30° bezüglich der Feineinstellposition versetzt ist und dass die Arretierungsposition in entgegengesetzter Umfangsrichtung um einen Winkelwert zwischen 15 und 30° bezüglich der Feineinstellposit

## Claims

1. A locking device (80) for locking a volume adjustment screw (14) for a pipetting system (1), the locking device being **characterised in that** it comprises:
on the one hand a ring dogging system (32) for holding the position of the adjustment screw (14), the system (32) including:
- a first toothed wheel (34) comprising first teeth (40);
- a second toothed wheel (36) comprising second teeth (46), said first toothed wheel being a lock wheel for being rotatably fixed with respect to a fixed piece (2) of the pipetting system, and the second wheel (36) for being rotatably integral with the adjustment screw (14), or vice versa;
- elastic return means (38) capable of returning the first and second wheels (34, 36) against each other in order to make the first teeth (40) cooperate with the second teeth (46),
and on the other hand a control system (74) for controlling the holding ring dogging system (32), the control system (74) including:
- a position selector (82) designed to be rotatably moved along a longitudinal central axis (12) of the pipetting system, between three positions including a free adjustment position, a fine adjustment position, and a locking position;
- a control member (88) rotatably integral with the position selector (82), the control member cooperating with said lock wheel (34) of the ring dogging system such that:
a) when the selector (82) is in the free adjustment position, the control member (88) holds the lock wheel (34) axially away from the other wheel (36) of the ring dogging system, by opposing the force developed by the elastic return means (38), such that the first and second teeth (40, 46) do not cooperate with each other;
b) when the selector (82) is in the fine adjustment position, the control member (88) allows the lock wheel (34) to axially move away from and then closer to the other wheel (36) when shifting from a tooth to another caused by the rotation of this other wheel; and
c) when the selector (82) is in the locking position, the control member (88) axially locks said lock wheel (34) so as to prohibit disengagement of the first and second teeth (40, 46).

2. The device according to claim 1, **characterised in that** the lock wheel (34) includes at least one radial lug (42) projecting outwardly, and **in that** the control member (88) includes at least one track (94) associated with each radial lug (42), the elastic return means (38) forcing the radial lug to bear against its associated track, the latter comprising:
- a first track portion (94a) cooperating with the radial lug when the selector is in the free adjustment position;
- a second track portion (94b) cooperating with the radial lug when the selector is in the fine adjustment position, the second track portion being axially offset from the first track portion within the control member (88); and
- a third track portion (94c) cooperating with the radial lug when the selector is in the locking position, a stop element (95) provided on the control member (88) being arranged axially facing the third track portion (94c), such that the radial lug (42) is axially located between this stop element (95), and the third track portion (94c).

3. The device according to claim 2, **characterised in that** the first, second and third track portions (94a, 94b, 94c) are arranged in this order along a circumferential direction.

4. The device according to claim 2 or claim 3, **characterised in that** the track (94) includes a slope-shaped transition zone (94') between the first and second track portions (94a, 94b), and **in that** the second track portion is axially located at the same level as the third track portion (94c).

5. The device according to any of claims 2 to 4, **characterised in that** the stop element (95) forms, with the third track portion (95), a slot (96) circumferentially open on the side of the second track portion (94b), and closed on the opposite side by a slot bottom (97).

6. The device according to any of claims 2 to 5, **characterised in that** the control member includes several tracks (94) circumferentially spaced from each other, each cooperating with a radial lug (42) of the lock wheel (34).

7. The device according to any of the preceding claims, **characterised in that** the control member (88) is annular.

8. The device according to any of the preceding claims, **characterised in that** the control member (88) and the selector (82) are made as a single piece, or by two distinct rotatably coupled pieces.

9. The device according to any of the preceding claims, **characterised in that**
said second teeth (46) of the second wheel (36) form a number N of concentric annular rows (58a, 58b), the number N being an integer higher than or equal to 2 and each row being possibly discontinuous,
said second wheel (36) has at least one teeth covering zone (64) in which the N annular rows (58a, 58b) of second teeth respectively have N covering sectors (66a, 66b) which cover each other along a radial direction (55) of the second wheel, and
the second teeth (46) of the N covering sectors are angularly offset from each other such that at least one of the first teeth (40) of the first toothed wheel (34) can be in several relative positions with respect to the second wheel (36), in each of which this first tooth (40) is in contact with one of the second teeth (46) of one of the N sectors (66a) and in contact with one of second teeth (46) of another of these N sectors (66b).

10. A pipetting system (1) comprising a volume adjustment screw (14), as well as a locking device (80) for locking this screw, according to any of the preceding claims.

11. The system according to claim 10, **characterised in that** it includes a four-digit counter (20).

12. The system according to claim 10 or claim 11, **characterised in that** the position selector (82) has an external gripping portion (84) arranged about a control rod (10) for controlling the pipetting system.

13. The system according to any of claims 10 to 12, **characterised in that** it is designed to warn of the selector (82) shifting to each of its three positions, preferably by clicks.

14. The pipetting system according to any of claims 10 to 13, combined to claim 2, **characterised in that** each radial lug (42) of the lock wheel radially passes through the control member (88) of the control system, to be slidably housed in a corresponding longitudinal groove (44) of the fixed piece (2) of the pipetting system.

15. The pipetting system according to any of claims 10 to 14, **characterised in that** the free adjustment position of the selector (82) is offset, in a circumferential direction, by an angular value between 15 and 30° with respect to the fine adjustment position, and **in that** the locking position is offset, in an opposite circumferential direction, by an angular value between 15 and 30° with respect to the fine adjustment position.
